# EUROPEAN PATENT SPECIFICATION

(11) **EP 0 452 613 B1**
(45) Date of publication and mention of the grant of the patent: **08.11.1995**
(21) Application number: 91100518.9
(22) Date of filing: 17.01.1991
(51) Int. Cl.: G01C 21/20

(54) **Image information display apparatus**
Bildinformationsanzeigegerät
Dispositif d'affichage d'information d'images

(30) Priority: 17.04.1990 JP 100621/90
(43) Date of publication of application: 23.10.1991
(73) Proprietor: PIONEER ELECTRONIC CORPORATION, Meguro-ku Tokyo 153 (JP)
(72) Inventor: Nishida, Junichi, c/o Pioneer Electronic Corp., Kawagoe-shi, Saitama (JP); Hayama, Akira, c/o Pioneer Electronic Corp., Kawagoe-shi, Saitama (JP); Kimura, Toshiyuki, c/o Pioneer Electronic Corp., Kawagoe-shi, Saitama (JP); Endo, Fumio, c/o Pioneer Electronic Corp., Kawagoe-shi, Saitama (JP); Sato, Hitoshi, c/o Pioneer Electronic Corp., Kawagoe-shi, Saitama (JP); Furukawa, Kiyoshi, c/o Pioneer Electronic Corp., Kawagoe-shi, Saitama (JP); Kaneko, Kenji, c/o Pioneer Electronic Corp., Kawagoe-shi, Saitama (JP)
(74) Representative: Klingseisen, Franz, Dipl.-Ing.

(56) References cited:
- WO-A-86/02764
- US-A- 4 737 927
- US-A- 4 780 717
- PATENT ABSTRACTS OF JAPAN vol. 11, no. 334 (P-631) 31 October 1987 ; & JP-A-62 116 210

## Description

The invention relates to an image information display apparatus according to the preamble of claim 1.

Such a map display apparatus is known from US-A-4,737 927. This known apparatus is designed in such a way that when displaying the map of a selected district it is only necessary to read and display the map information and name information of the basic selections belonging to the district.

Recently, various systems have been developed to be used in a vehicle, in which a display is installed in a vehicle as one of installable units, and also such system is provided with a group of map data stored in a recording medium such as a CD-ROM, and a reading device to read out the group of map data of a desired area and send the data as a display information signal to a display unit, whereby a map is displayed on a screen of the display unit, thus permitting a user to check and confirm the present position of the vehicle.

In the CD-ROM serving as a recording medium are stored a group of large-area map data corresponding to a given large area and plural groups of segmented map data corresponding to a plurality of sectors resulting from segmentation of the large area. In display of a map, therefore, the necessary group of map data is read out from the CD-ROM and is supplied as a display information signal to the display, so that the large area can be displayed as a large-area map on a scale of small reduction or one of the multiple sectors can be displayed as an enlarged map on a scale of large reduction whenever necessary.

In selecting the desired map from multiple maps and displaying it, it is typical that a user enters identification data of that map. In this case, in order to select and display the map where the desired place or facility (hereinafter referred to as "spot") is located, the user should know in advance to which map the spot belongs. It is very difficult, however, to know all the correlations between individual spots and those maps where the spots are located. Actually, therefore, the user should select and display potential maps one by one to find the desired spot, thus requiring time to display the map showing the desired spot.

It is therefore an object of the present invention to provide an image information display apparatus which can instantaneously display a map showing the desired spot.

This object is achieved by the features in the characterizing part of claim 1.

When, in the image information display apparatus embodying the present invention, a given spot on a map being displayed is manually specified and a spot name specific to this spot is manually set, identification information of a recording medium storing a group of map data to which spot data indicating the spot belongs and map identification information indicating a stored position of the group of map data on the recording medium are stored together with coordinate data of a specified spot on a display screen, for each specified spot in association with the spot name. In displaying a map showing the desired spot, a list of spot names is first displayed, so that a group of map data corresponding to the desired spot name selected among the list based on the identification information of the recording medium which has groups of map data stored in advance in association with the spot names, and the map identification information, thus displaying the proper map and distinguishably displaying the desired and selected spot on the map.

### BRIEF DESCRIPTION OF THE DRAWINGS

Fig. 1 is a block diagram illustrating one embodiment of the present invention;
Fig. 2 is a flowchart illustrating the processing sequence of a spot setting routine executed by a CPU (Central Processing Unit); and
Fig. 3 is a flowchart illustrating the processing sequence of a spot calling routine executed by the CPU.

### DETAILED DESCRIPTION OF THE PREFERRED EMBODIMENT

A preferred embodiment of the present invention will now be described in detail while referring to the accompanying drawings.

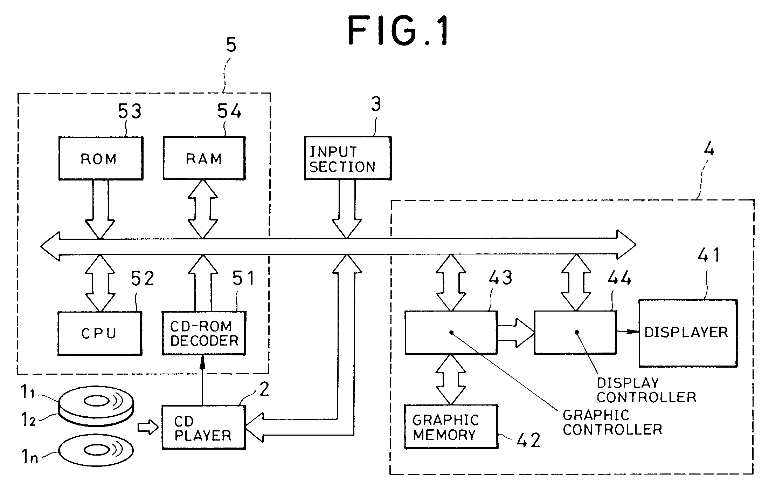

Fig. 1 presents a block diagram showing one embodiment of the present invention. The present system comprises a CD player 2 for reading out map data from a CD-ROM 1 serving as a recording medium, an input section 3 for issuing various commands through a key input, a display section 4 including a display 41 to display a map, and a system controller 5 for executing the general control of the system. These units are mutually connected via a bus line BL. The CD player 2 may be a so-called multi-disk player capable of holding a plurality of CD-ROMs 1₁ to 1ₙ and properly selecting one of them for data reproduction. The multi-disk player may have a structure as disclosed in, for example, Japanese Unexamined Patent Publication No. 61-261851.

In a single CD-ROM 1 are stored a group of map data corresponding to the map of one of several large areas (e.g., four large areas) acquired by segmenting the whole country such as Japan, and plural groups of map data respectively corresponding to the maps of multiple sectors defined by the segmentation of the one large area. These groups of map data are properly read out from the CD-ROM 1 and supplied to the display section 4 to display the map of the large area or an enlarged map (map of each sector).

The map data read out from the CD-ROM 1 by the CD player 2 is decoded by a CD-ROM decoder 51 in the system controller 5, then sent on the bus line BL. The system controller 5 comprises the CD-ROM decoder 51, a CPU 52, a ROM (Read Only Memory) 53, and a RAM (Random Access Memory) 54. The CPU 52 executes various arithmetic operations and controls. The ROM 53 has various processing programs for the CPU 52 and the other necessary information written therein. Data necessary for execution of a program and supplementary information or the like in the map data decoded by the CD-ROM decoder 51 are written in the RAM 54 or read out therefrom.

The input section 3 includes a keyboard having various instruction keys, cursor keys to move a cursor on the display screen, and character keys, such as kana (Japanese phonetic letters) keys or alphabet keys, to input an identification name or the like. In accordance with key inputs made by a user, the input section 3 issues various instructions or command to the system controller 5.

The display section 4 comprises the display 41 such as of liquid crystal, a graphic memory 42 constituted of a V(Video)-RAM or the like, a graphic controller 43, and a display controller 44. The graphic controller 43 depicts map data, sent from the system controller 5, as image data into the graphic memory 42 and outputs the image data. The display controller 44 controls the display 41 to display a map based on the image data from the graphic controller 43.

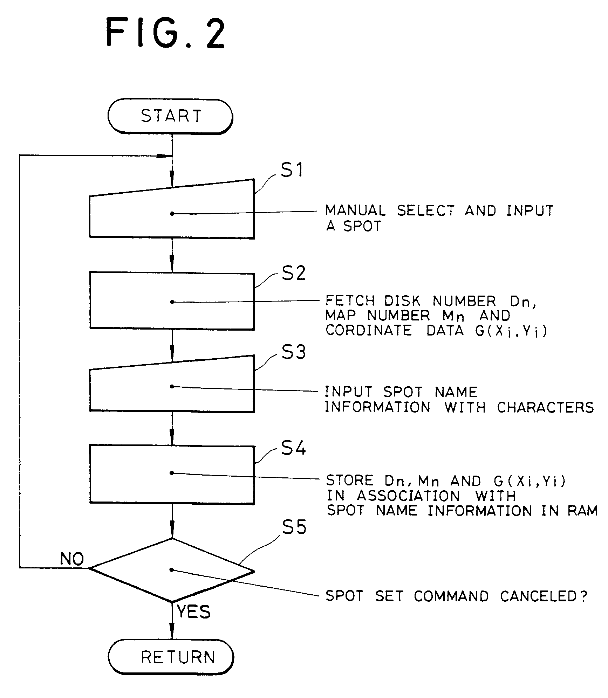

Referring to the flowchart shown in Fig. 2, a description will be given regarding the processing sequence of a spot setting routine which is executed by the CPU 52 of the system controller 5 at the time when information about a given spot on a map on the display 41 is stored in the RAM 54. It should be noted that this spot setting routine is called and executed when a spot set command is issued by a key input made by the user during map display.

When the user operates the cursor keys to point a specific spot on the map and makes a key input to select the pointed spot (step S1), the CPU 52 fetches a disk number Dₙ of one of the CD-ROMs 1₁ to 1ₙ in which a group of map data covering spot data of the pointed spot is recorded, a map number Mₙ as address data indicating the stored position of the group of map data on the CD-ROM 1, and coordinate data G (xi, yi) of the pointed spot on the screen (step S2), then waits for the user's operating the character keys to enter spot name information specific to the pointed spot (step S3). When the spot name information is input, the CPU 52 associates the disk number Dₙ, map number Mₙ and spot coordinate data G (xi, yi) fetched in step S2 with the spot name information, and stores these data as single channel information CH in a predetermined address area in the RAM 54 (step S4). The CPU 52 repeats the above processing until it determines that the spot set command is canceled in step S5.

Through the above repetitive processing, information on a plurality of specified spots on a single map, i.e., the disk number Dₙ, map number Mₙ and spot coordinate data G (xi, yi) associated with the spot name information, can be stored as plural pieces of channel information CHₙ in the RAM 54. If the above-described processing is executed while switching the CD-ROMs 1₁ to 1ₙ from one to another or changing the to-be-displayed map in a single CD-ROM 1 from one to another, information on a plurality of specified spots over multiple CD-ROMs 11 to 1n or multiple maps can be stored as plural pieces of channel information CHₙ.

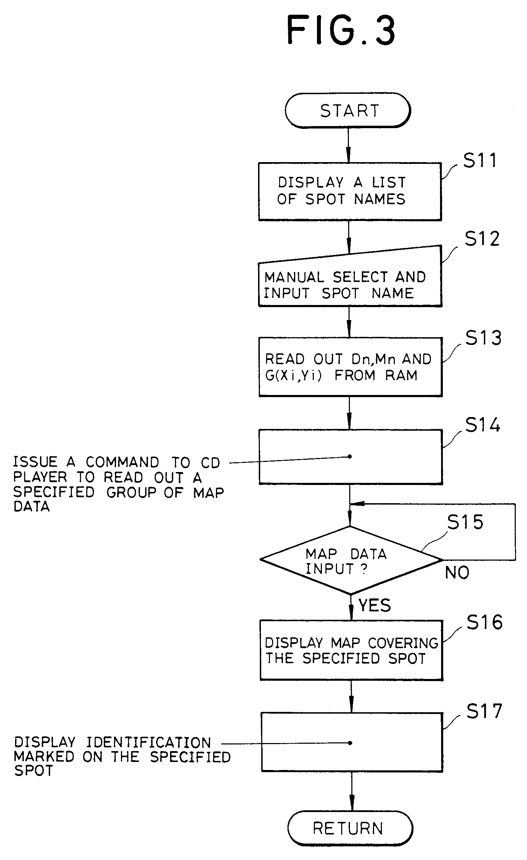

Referring to the flowchart shown in Fig. 3, a description will be given regarding the processing sequence of a spot calling routine which is executed by the CPU 52 at the time an arbitrarily specified spot is called and displayed on the basis of the channel information CHₙ with respect to individual specified points stored in the above manner in the RAM 54. It should be noted that this spot calling routine is called and executed when a spot call command is issued by a key input made by the user during map display.

When the spot call command is issued, the CPU 52 sequentially supplies the spot name information among multiple pieces of channel information CHₙ stored in advance in the RAM 54 to the display section 4 as display information, and controls the graphic controller 43 and display controller 44 to display a list of spot names on the display 41 (step S11), then waits for selective input of the desired spot name made by the operation of the cursor keys by the user (step S12).

When the desired spot name is selectively input, the CPU 52 reads out the disk number Dₙ, map number Mₙ and spot coordinate data G (Gi, yi) associated with the selected spot name, from the RAM 54 (step S13), and issues a read command to the CD player 2 to read a group of map data specified by the disk number Dₙ, and map number Mₙ (step S14). The CD player 2 selects the CD-ROM 1 having the specified disk number Dn, searches for the address indicated by the specified map number Mn and reads out the group of map data stored at this address under the control of the inner controller. The read map data is supplied to the system controller 5, decoded by the CD-ROM decoder 51, then sent on the bus line BL.

When the map data is transferred on the bus line BL, the CPU 52 judges that the map data has been input (step S15), supplies the map data as the map display information to the display section 4 and controls the graphic controller 43 and display controller 44 to display the map covering the specified spot on the display 41 (step S16). The CPU 52 also supplies the spot coordinate data G (xi, yi), read out from the RAM 54 in step S13, to the display section 4 as spot information, and controls the graphic controller 43 and display controller 44 to display an identification mark (e.g., the first letter of the spot name) on the specified spot on the map being displayed (step S17).

Although the foregoing description of this embodiment has been given with reference to the case where a multi-disk player is used as the CD player 2, the present invention can also be applied to a case of using a single-disk player. If no CD-ROM having the specified disk number Dn is loaded in the single-disk player, a message such as "Specified CD-ROM not loaded. Please load the CD-ROM with the disk number Dn." has only to be displayed on the display 41.

As described above, according to the image information display apparatus embodying the present invention, a given spot on a map being displayed is manually specified, a spot name specific to this spot is manually set, identification information of a recording medium storing a group of map data to which spot data indicating the spot belongs and map identification information indicating a stored position of the group of map data on the recording medium are stored together with coordinate data of a specified spot on a display screen, for each specified spot in association with the spot name. In displaying a map showing the desired spot, a list of spot names is displayed, so that a group of map data corresponding to the desired spot name selected among the list based on the identification information of the recording medium which has groups of map data stored in advance in association with the spot names, and the map identification information, thus displaying the proper map and distinguishably displaying the desired and selected spot on the map. Even if the user does not know the correlation between individual spots and a map having these spots, therefore, a map covering the selected spot can be instantaneously displayed and the selected spot can be distinguishably shown on the map.

## Claims

1. An image information display apparatus comprising:
read means (2) for reading out plural groups of map data respectively corresponding to a plurality of maps from a recording medium (1) storing the groups of map data;
display means (41) for displaying an image corresponding to a received display information signal supplied thereto;
nap display control means (44) for causing the read means to acquire one of the plural groups of map data in response to a read command and supplying the acquired map data as the display information signal to the display means to display the map associated with the display information signal;
means for supplying to said display means (41), as said display information signal, a spot information signal to distinguishably display a given spot on a map being displayed;
means for generating spot name information specific to for the spot;
storage means (54) for storing identification information for the recording medium having that group of map data to which spot data indicating said spot belongs and map identification information indicating a stored position of the group of map data on the recording medium, together with coordinate data of said spot on a display screen, spot by spot in association with the spot name information in response to a spot set command;
means for supplying to said display means (41), as the display information signal, the spot name information stored in the storage means (54) to display a list of spot names in response to a spot call command;
select means (3) for selecting a desired spot name from the list being displayed; and
means (52) for supplying said read command to said map display control means (44) to acquire that group of map data which corresponds to the identification information of the recording medium (1) and the map identification information obtained from the storage means based on spot data of the spot name selected by said select means (3), and supplying the coordinate data from the storage means as the spot information signal to said display means,
characterized in that the apparatus is designed in such a way that an operator may select any spot on a map, label it by a name which then is stored and can be recalled with the corresponding map.

2. An image information display apparatus according to Claim 1, wherein said read means (2) selects one of a plurality of recording media (1) based on the obtained identification information of the recording medium, and reads out a group of map data corresponding to the obtained map identification information.

## Patentansprüche

1. Bildinformationsanzeigegerät, das folgendes aufweist:
eine Leseeinrichtung (2) zum Auslesen vieler Gruppen von Kartendaten, die jeweils einer Vielzahl von Karten entsprechen, aus einem Aufzeichnungsmedium (1), das die Gruppen von Kartendaten speichert;
eine Anzeigeeinrichtung (41) zum Anzeigen eines Bildes, das einem ihr zugeführten empfangenen Anzeigeinformationssignal entspricht;
eine Kartenanzeige-Steuereinrichtung (44) zum Veranlassen, daß die Leseeinrichtung eine der vielen Gruppen von Kartendaten in Antwort auf einen Lesebefehl erhält, und zum Zuführen der erhaltenen Kartendaten als das Anzeigeinformationssignal zu der Anzeigeeinrichtung, um die zu dem Anzeigeinformationssignal gehörende Karte anzuzeigen;
eine Einrichtung zum Zuführen eines Punktinformationssignals zu der Anzeigeeinrichtung (41) als das Anzeigeinformationssignal, um einen gegebenen Punkt auf einer Karte, die gerade angezeigt wird, unterscheidbar anzuzeigen;
eine Einrichtung zum Erzeugen eine Punktnameninformation, die für den Punkt spezifisch ist; eine Speichereinrichtung (54) zum Speichern einer Erkennungsinformation für das Aufzeichnungsmedium mit jener Gruppe von Kartendaten, die zu der den Punkt bezeichnende Punktdaten gehören, und einer Kartenerkennungsinformation, die eine gespeicherte Position der Gruppe von Kartendaten auf dem Aufzeichnungsmedium anzeigt, zusammen mit Koordinatendaten des Punktes auf einem Anzeigeschirm, und zwar Punkt für Punkt, in Verbindung mit der Punktnameninformation in Antwort auf einen Punkteinstellbefehl;
eine Einrichtung zum Zuführen der in der Speichereinrichtung (54) gespeicherten Punktnameninformation als das Anzeigeinformationssignal zu der Anzeigeeinrichtung (41), um eine Liste von Punktnamen in Antwort auf einen Punktaufrufbefehl anzuzeigen;
eine Auswahleinrichtung (3) zum Auswählen eines gewünschten Punktnamens aus der gerade angezeigten Liste; und
eine Einrichtung (52) zum Zuführen des Lesebefehls zu der Kartenanzeige-Steuereinrichtung (44), um jene Gruppe von Kartendaten zu erhalten, die der Erkennungsinformation des Aufzeichnungsmediums (1) und der aus der Speichereinrichtung basierend auf Punktdaten des durch die Auswahleinrichtung (3) ausgewählten Punktnamens erhaltenen Kartenerkennungsinformation entspricht, und zum Zuführen der Koordinatendaten aus der Speichereinrichtung als das Punktinformationssignal zu der Anzeigeeinrichtung,
**dadurch gekennzeichnet**, daß
das Gerät derart aufgebaut ist, daß ein Bediener irgendeinen Punkt auf einer Karte auswählen kann, ihn mit einem Namen bezeichnen kann, der dann gespeichert wird und mit der entsprechenden Karte wieder aufgerufen werden kann.

2. Bildinformationsanzeigegerät nach Anspruch 1, wobei die Leseeinrichtung (2) eines einer Vielzahl von Aufzeichnungsmedien (1) basierend auf der erhaltenen Erkennungsinformation des Aufzeichnungsmediums auswählt und eine Gruppe von Kartendaten entsprechend der erhaltenen Kartenerkennungsinformation ausliest.

## Revendications

1. Dispositif d'affichage d'informations d'image, comprenant :
un moyen de lecture (2) pour extraire, d'un support d'enregistrement (1) stockant des groupes de données de carte, plusieurs groupes de données de carte correspondant respectivement à une pluralité de cartes ;
un moyen d'affichage (41) pour afficher une image correspondant à un signal d'informations d'affichage reçu fourni à celui-ci ;
un moyen de commande (44) d'affichage de carte pour amener le moyen de lecture à rechercher un groupe parmi la pluralité de groupes de données de carte en réponse à une instruction de lecture et pour fournir au moyen d'affichage les données de carte obtenues en tant que signal d'informations d'affichage, pour afficher la carte correspondant au signal d'informations d'affichage ;
un moyen pour fournir audit moyen d'affichage (41), en tant que signal d'informations d'affichage, un signal d'informations de point afin d'afficher de manière lisible un point donné sur une carte affichée ;
un moyen pour générer des informations de toponymie spécifiques du point ;
un moyen de stockage (54) pour stocker des informations d'identification pour le moyen d'enregistrement comportant le groupe de données de carte auquel appartiennent les données de point indiquant ledit point et des informations d'identification de carte indiquant une position mémorisée du groupe de données de carte sur le support d'enregistrement, conjointement avec des données de coordonnées dudit point sur un écran d'affichage, point par point en association avec les informations de toponymie, en réponse à une instruction de définition de point ;
un moyen pour fournir audit moyen d'affichage (41), en tant que signal d'informations d'affichage, les informations de toponymie stockées dans le moyen de stockage (54) afin d'afficher une liste de toponymes en réponse à une instruction d'appel de point ;
un moyen de sélection (3) pour sélectionner un toponyme voulu dans la liste affichée ; et
un moyen (52) pour fournir ladite instruction de lecture audit moyen (44) de commande d'affichage de carte afin d'obtenir le groupe de données de carte qui correspond aux informations d'identification du support d'enregistrement (1) et aux informations d'identification de carte obtenues à partir du moyen de stockage en fonction des données de point du toponyme sélectionné par ledit moyen de sélection (3), et pour fournir audit moyen d'affichage, en tant que signal d'informations de point, les données de coordonnées provenant du moyen de stockage, caractérisé en ce que le dispositif est conçu de telle manière qu'un opérateur puisse sélectionner n'importe quel point d'une carte, l'identifier par un nom qui est ensuite stocké et qui peut être rappelé avec la carte correspondante.

2. Dispositif d'affichage d'informations d'image selon la revendication 1, dans lequel ledit moyen de lecture (2) sélectionne un support parmi une pluralité de supports d'enregistrement (1), en fonction des informations d'identification obtenues du support d'enregistrement, et extrait un groupe de données de carte correspondant aux informations d'identification de carte obtenues.
